# EUROPÄISCHE PATENTANMELDUNG

(11) **EP 4 843 719 A1**
(43) Veröffentlichungstag der Anmeldung: **25.11.2026**
(21) Anmeldenummer: 26180010.6
(22) Anmeldetag: 20.05.2026
(51) Int. Cl.: B25J 19/02, B25J 9/16, B25J 15/06, B27M 1/08, B65G 61/00

(54) **HANDHABUNGSEINRICHTUNG**

(30) Priorität: 22.05.2025 DE 102025119974
(71) Anmelder: HOMAG GmbH, 72296 Schopfloch (DE)
(72) Erfinder: Schöller, Marvin, 72293 Glatten (DE); Gan, Yimin, 72108 Rottenburg am Neckar (DE); Hagestedt, Lukas, 72178 Waldachtal (DE); Ludwig, Jens, 09600 Oberschöna (DE); Ziller, Dominik, 09600 Oberschöna (DE); Franke, Daniel, 09548 Deutschneudorf (DE); Schubert, Maik, 09599 Freiberg (DE); Dettling, Peter, 72160 Horb (DE); Kopp, Holger, 72175 Dornhan (DE); Czechleba, Udo, 21745 Hemmoor (DE); Lis, Matthias, 72202 Nagold (DE); Schemminger, Fabian, 72184 Eutingen i. G. (DE)
(74) Vertreter: Hoffmann Eitle

(57) **Zusammenfassung**

Es wird eine Handhabungseinrichtung (10) zur Handhabung eines oder mehrerer Werkstücke (W, W') bereitgestellt, umfassend: eine Übergabeeinrichtung (30) zur Aufnahme und Übergabe des oder der Werkstücke (W, W') zwischen einem Ausgangsstapel, einer Transporteinrichtung und/oder einer Bearbeitungsmaschine, ein Kameramodul (20), das mindestens eine Kamera aufweist, wobei das Kameramodul (20) eingerichtet ist, das Werkstück oder die mehreren Werkstücke (W, W') zur räumlichen Identifikation zu erfassen.

## Beschreibung

### Technisches Gebiet

Die Erfindung betrifft eine Handhabungseinrichtung zur Handhabung eines oder mehrerer Werkstücke, die bevorzugt plattenförmig, stabförmig, als Freiform oder flächenförmig ausgebildet sind. Insbesondere ist ein solches Werkstück zumindest abschnittsweise aus Holz oder einem Holzwerkstoff.

### Stand der Technik

Im Bereich der holzverarbeitenden Industrie sind Systeme für die Positionserkennung von Paneelen bekannt.

Insbesondere wird in der EP 2 403 792 A1 eine Maschine für die Behandlung von Holzpaneelen oder ähnlichen Paneelen und für die Positionserkennung nach der Behandlung beschrieben. Eine Erfassungseinheit umfasst eine Bearbeitungseinheit für eine Platte, die an ihrem Eingang die zumindest eine Platte empfängt und die an ihrem Ausgang eine Vielzahl von Abschnitten bereitstellt, sowie eine Videokamera, die dafür konfiguriert ist, die auf die Position jedes Abschnittes der Vielzahl von Abschnitten auf der Arbeitsfläche bezogenen Daten zu erfassen.

### Darstellung der Erfindung

Die Erfindung zielt darauf ab, eine Handhabungseinrichtung mit erweitertem Einsatzspektrum bereitzustellen.

Anspruch 1 zeigt hierfür eine Lösung. Weitere bevorzugte Ausführungsformen sind in den abhängigen Ansprüchen und in der nachfolgenden Beschreibung aufgeführt.

Insbesondere umfasst eine Handhabungseinrichtung ein Kameramodul, das mindestens eine Kamera aufweist. Zudem hat die Handhabungseinrichtung eine Übergabeeinrichtung zur Aufnahme und Übergabe des oder der Werkstücke zwischen einem Ausgangsstapel, einer Transporteinrichtung und/oder einer Bearbeitungsmaschine. Das Kameramodul ist eingerichtet, das Werkstück oder die mehreren Werkstücke zur räumlichen Identifikation zu erfassen.

Ein Werkstück kann plattenförmig, stabförmig, als Freiform oder flächenförmig ausgebildet sein.

Mit der erfindungsgemäßen Vorrichtung wird ein autonomes, schnelles und komfortables Ausrichten von (insbesondere plattenförmigen) Werkstücken ermöglicht. Dabei kann eine direkte Beschickung ohne zusätzliche Ausrichtung der Werkstücke ermöglicht werden.

Ferner können unbekannte Werkstücke in chaotischen Stapeln identifiziert werden, wodurch ihnen eine nachfolgende Bearbeitung zugeordnet werden kann. Ein Werkstückstapel ist chaotisch, wenn keine regelmäßigen Abstände zwischen den Werkstücken vorhanden sind und die Werkstücke nicht in einer vorbestimmten Bearbeitungsreihenfolge angeordnet sind.

Darüber hinaus ermöglicht es die Anwendung der Werkstückerkennung mittels Bildverarbeitungsmodul, die Werkstücke in beliebiger Reihenfolge und Anordnung beispielsweise einem Werkstückstapel zuzuführen. Dadurch kann ein kompakter Stapel mit einem beliebigen Sortierkriterium entstehen, oder die Werkstücke können beispielsweise einer Umlaufstrecke zugeführt werden, so dass ein maximaler Füllgrad der Umlaufstrecke erreicht werden kann.

Zusätzlich wird es durch die Erfassung der realen, individuellen Lage des Werkstücks in Verbindung mit der verfügbaren Genauigkeit der Kamera ermöglicht, Werkstücke entsprechend präzise einer Bearbeitung zuzuführen. Aufwendige Konstruktionen, welche bisher das Feinausrichten der Werkstücke übernommen haben (wie beispielsweise Rollenbahnen oder ähnliches) können damit entfallen. Damit können die Investitionskosten und den Platzbedarf reduziert werden.

Gemäß einer Ausführungsform umfasst die Handhabungseinrichtung ein Bildverarbeitungsmodul, das eingerichtet ist, Daten vom Kameramodul zu empfangen. Das Bildverarbeitungsmodul ist eingerichtet, Daten einer Relativbewegung zwischen dem Werkstück und dem Kameramodul und von der Kamera aufgenommen Bildinformationen zu verknüpfen.

Das Bildverarbeitungsmodul kann an der Übergabeeinrichtung vorgesehen sein. Gemäß einer weiteren Ausführungsform ist das Bildverarbeitungsmodul mittels einer Datenverbindung mit dem Kameramodul verbunden.

In einer Ausführungsform umfasst die Übergabeeinrichtung zumindest eine Halteeinrichtung, beispielsweise eine Saugtraverse, wobei bevorzugt ist, dass die Halteeinrichtung zur Aufnahme eines oder mehrerer Werkstücke eingerichtet ist.

Dadurch können mehrere Werkstücke effizienter anhand von Bilddaten gehandhabt werden, d.h. in nur einem Arbeitshub an die Ablegestelle geführt und entsprechend der festgelegten Reihenfolge nacheinander zugeführt werden. Somit kann der Durchsatz der gehandhabten Werkstücke erhöht werden.

In einer Ausführungsform kann das Kameramodul eingerichtet sein, den aktuellen Produktionsgrad und den aktuellen Fertigungsgrad des oder der gehandhabten Werkstücke in Echtzeit rückmelden zu können.

Auf diese Weise kann der Betrieb des Systems überwacht werden und die Handhabungseinrichtung kann mit dem Bedienpersonal oder anderen Maschinen Informationen austauschen.

In einer Ausführungsform kann das Kameramodul eingerichtet sein, zu erkennen, ob eine Umrüstung für die Aufnahme, und/oder Zuführung des oder der Werkstücke notwendig ist. Zudem kann die Übergabeeinrichtung eingerichtet sein, auf Basis dieser Erkennung des Bildverarbeitungsmoduls die Umrüstung automatisch durchzuführen.

Damit kann die Übergabeeinrichtung eine notwendige Umrüstung durchführen, so dass ohne äußeres Zutun ein kontinuierlicher Bearbeitungsprozess entstehen kann. Damit kann der Nutzungsgrad des Systems erhöht werden.

In einer Ausführungsform kann das Kameramodul eingerichtet sein, zu erkennen, ob eine Umrüstung für die Aufnahme und/oder Zuführung des oder der Werkstücke manuell durchführbar ist. Ferner kann die Übergabeeinrichtung eingerichtet sein, auf Basis dieser Erkennung des Kameramoduls das oder die Werkstücke auf einem gesonderten Platz abzulegen.

Somit liegen diese Werkstücke am Ende des Bearbeitungsprozesses der Handhabungseinrichtung dem Bediener für eine manuelle Bearbeitung vor. Daher können vorzeitige Stillstände während des Betriebs der Handhabungseinrichtung vermieden werden.

In einer Ausführungsform kann das Kameramodul eingerichtet sein, das oder die Werkstücke anhand seiner oder ihrer Teilegeometrie zu identifizieren, und/oder nachfolgende Bearbeitungen auf das oder die Werkstücke anhand eine von dem Kameramodul gelesenen Code-Informationen zuzuordnen, und/oder Stapelgeometrie und/oder Höheninformation eines Stapels von Werkstücken zum Abtragen des Stapels zu erkennen.

Dadurch kann die Übergabeeinrichtung die Werkstücke an günstigen Stellen greifen, damit die Werkstücke beim Handhaben nicht beschädigt werden und/oder der Stapel zusammenfällt.

In einer Ausführungsform kann die Handhabungseinrichtung, insbesondere das Bildverarbeitungsmodul, ausgebildet sein, mindestens teilweise eine künstliche Intelligenz zu einer Prozessoptimierung zu verwenden, wobei die Prozessoptimierung bevorzugt eine Optimierung der Bestimmung der Reihenfolge für die Aufnahme und Zuführung der Werkstücke ist.

Durch die künstliche Intelligenz kann der Anwender das Verhalten des Werkstückflusses in dem gesamten System direkt nach seinen Bedürfnissen beeinflussen, beispielsweise durch Anpassung der Lernparameter der künstlichen Intelligenz.

In einer Ausführungsform kann die Handhabungseinrichtung, insbesondere das Bildverarbeitungsmodul, eingerichtet sein, mindestens teilweise eine Validierung zwischen den von dem Kameramodul aufgenommenen Bilddaten und geometrischen Informationen aus einem bereits vorhandenen Datensatz durchzuführen.

Auf diese Weise kann die Fehlerquote des Bildverarbeitungsmoduls bei der Erkennung von Werkstücken reduziert werden.

Falls künstliche Intelligenz für die Bildverarbeitung verwendet wird, kann zusätzlich die künstliche Intelligenz auf Basis der Validierungsergebnissen trainiert werden.

In einer Ausführungsform kann das Kameramodul an der Übergabeeinrichtung angebracht werden.

Da für die Erkennung von Werkstücken im Raum eine Relativbewegung zwischen der Kamera und dem Werkstück bevorzugt ist, ist es von Vorteil, wenn das Kameramodul mit der Übergabeeinrichtung mobil ist. Dies erleichtert das Bewegen der Kamera relativ zu den Werkstücken.

In einer Ausführungsform kann ein System bereitgestellt werden, das eine erfindungsgemäße Handhabungseinrichtung sowie eine Rückführstrecke, und eine Bearbeitungsmaschine, insbesondere eine Beschichtungsmaschine, wie beispielsweise eine Kantenanleimmaschine, umfasst.

Das Bildverarbeitungsmodul kann an der Übergabeeinrichtung vorgesehen sein. Gemäß einer weiteren Ausführungsform ist das Bildverarbeitungsmodul mittels einer Datenverbindung mit dem Kameramodul verbunden.

Durch das System kann der Stillstand des Systems aufgrund von Personalmangel vermieden werden und/oder außerhalb der regulären Arbeitszeiten produziert werden.

In einer Ausführungsform wird ein Verfahren zur Handhabung eines oder mehrerer Werkstücke bereitgestellt, die bevorzugt plattenförmig sind, wobei bevorzugt die Handhabungseinrichtung gemäß einem der vorangegangenen Aspekte verwendet wird. Das Verfahren umfasst das Anfertigen von Bildern des oder der Werkstücke durch ein Kameramodul, das räumliche Identifizieren des oder der Werkstücke, und das Aufnehmen und Übergeben des oder der Werkstücke durch eine Übergabeeinrichtung zwischen einem Ausgangsstapel, einer Transporteinrichtung und/oder einer Bearbeitungsmaschine.

Für das Identifizieren des oder der Werkstücke können Daten einer Relativbewegung zwischen dem Werkstück und dem Kameramodul und von der Kamera aufgenommenen Bildinformationen verknüpft werden.

### Kurze Beschreibung der Zeichnungen

Weitere Merkmale und Vorteile der Erfindung ergeben sich aus der nachfolgenden Beschreibung einer Ausführungsform sowie bestimmter Modifikationen unter Bezugnahme auf die beiliegenden Zeichnungen.
- Fig. 1: zeigt eine Seitenansicht einer Ausführungsform der erfindungsgemäßen Handhabungseinrichtung.
- Fig. 2: zeigt ein Detail einer Draufsicht einer Übergabeeinrichtung der erfindungsgemäßen Handhabungseinrichtung.
- Fig. 3: zeigt ein Detail einer Seitenansicht der in Figur 2 dargestellten Übergabeeinrichtung der Handhabungseinrichtung.
- Fig. 4: ist eine schematische Ansicht der Handhabungseinrichtung zur Erläuterung des Einsatzes der Handhabungseinrichtung, wobei die Übergabeeinrichtung weggelassen wurde.
- Fig. 5: zeigt einen chaotischen Werkstückstapel mit mehreren Werkstücken.

### Beschreibung der bevorzugten Ausführungsformen

Anhand der Figuren wird eine bevorzugte Ausführungsform der Erfindung anschaulich beschrieben. Modifikationen bestimmter Merkmale können miteinander kombiniert werden, um weitere Ausführungsformen auszubilden.

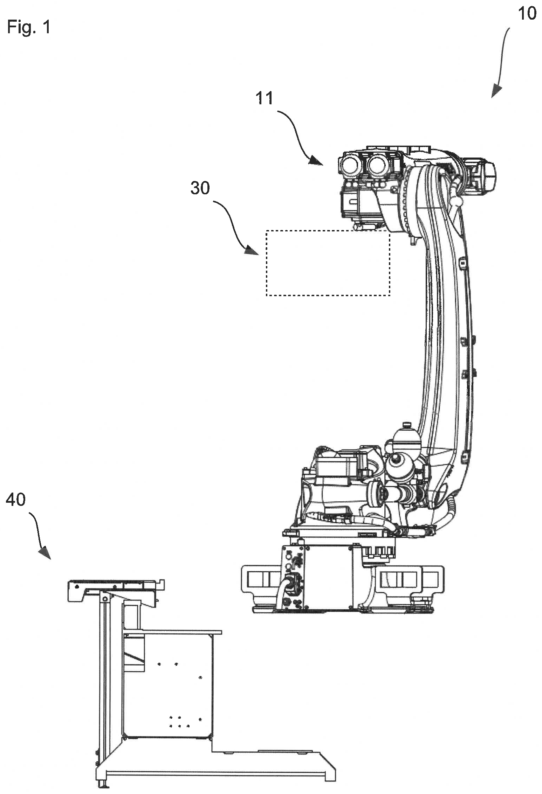

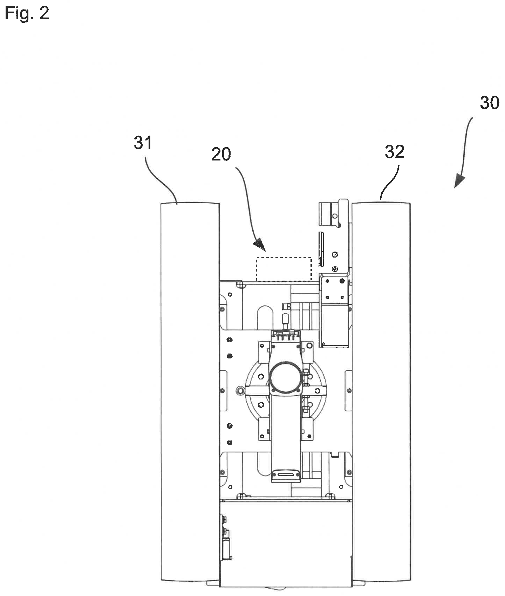

Fig. 1 zeigt eine Handhabungseinrichtung 10, die eine Übergabeeinrichtung 30, ein Kameramodul 20 und ein Bildverarbeitungsmodul (nicht dargestellt) aufnimmt. Die Übergabeeinrichtung 30 und das Kameramodul 20 sind in den Figuren 2-3 dargestellt. Das Bildverarbeitungsmodul kann an der Handhabungseinrichtung 10 vorgesehen oder mit der Handhabungseinrichtung 10 zum Datenaustausch verbunden sein.

Die Handhabungseinrichtung 10 ist eingerichtet, beispielsweise eine Beschichtungsmaschine 40 mit einem oder mehreren plattenförmigen Werkstücken zu beschicken. Die Beschickung kann dabei von einem Werkstückstapel oder einer Rückführung der Beschichtungsmaschine 40 erfolgen. In Fig. 1 ist lediglich ein Abschnitt der Beschichtungsmaschine 40 dargestellt, in dem ein Werkstück zugeführt werden kann.

Die Beschichtungsmaschine 40 ist insbesondere als Durchlaufmaschine ausgebildet und damit eingerichtet, ein Werkstück zu bewegen. Entlang der Förderstrecke werden verschiedene Bearbeitungsvorgänge, wie das Aufbringen eines Beschichtungsmaterial an einer Schmalseite des Werkstücks, durchgeführt.

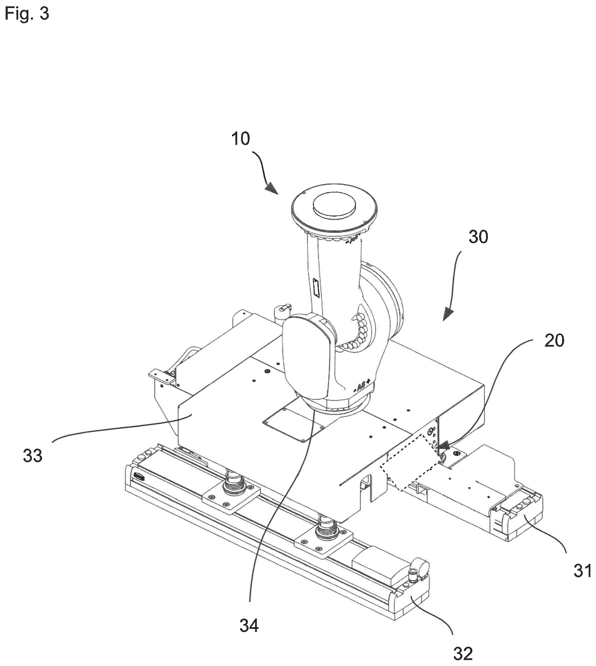

Im Ausführungsbeispiel ist die Handhabungseinrichtung 10 als Mehrachsroboter ausgebildet. An einem Bereich der Handhabungseinrichtung 10 ist eine Schnittstelle 11 vorgesehen, um die in den Fig. 2 und 3 im Detail dargestellte Übergabeeinrichtung 30 aufzunehmen und mit der Handhabungseinrichtung 10 zu koppeln.

Die Handhabungseinrichtung 10, die Beschichtungsmaschine 40 und eine eventuelle Rückführstrecke können beispielsweise als eine Produktionszelle vorgesehen sein, die im teilautonomen Betrieb vorübergehend selbständig produzieren kann. Die Produktionszelle soll in Produktion gehalten werden bis entweder das bereitgestellte Verbrauchsmaterial, wie ein streifenförmiges Beschichtungsmaterial oder ein Haftmittel, aufgebraucht ist und/oder alle bereitgestellten Werkstücke bearbeitet wurden. Die Konzeption dieser Produktionszelle ist hierbei auf maximale Flexibilität, einfache Handhabung und eine hohe Betriebssicherheit ausgerichtet. Die Handhabungseinrichtung 10 kann dabei temporär die Aufgaben des Bedieners wahrnehmen und den Beschickvorgang anhand der über das Kameramodul 20 erkannten visuellen Daten und der im System hinterlegten Auftragslisten zu steuern.

Fig. 2 zeigt die Übergabeeinrichtung 30 in einer Draufsicht, wobei die Übergabeeinrichtung 30 eine erste Halteeinrichtung 31 und eine zweite Halteeinrichtung 32 aufweist. Die Halteeinrichtungen 31, 32 sind insbesondere als Saugtraversen ausgebildet, sodass ein oder mehrere Werkstücke an deren Oberseite aufgenommen und gehalten werden können. Gemäß einer Modifikation kann auch eine Halteeinrichtung vorgesehen sein, oder die Übergabeeinrichtung 30 umfasst mehrere Halteeinrichtungen.

Ferner umfasst die Übergabeeinrichtung 30 ein Gehäuse 33 sowie eine Schnittstelle 34. Die Schnittstelle 34 ist dafür vorgesehen, die Übergabeeinrichtung 30 mit der Handhabungseinrichtung 10 zu verbinden.

An der Übergabeeinrichtung 30 ist das Kameramodul 20 angebracht. Damit ist die Kamera des Kameramoduls 20 anhand einer Bewegung der Übergabeeinrichtung 30 ebenfalls beweglich.

In weiteren Ausführungsformen kann die Kamera jedoch auch feststehend sein und Werkstücke können über eine Transporteinheit vorbeigeführt werden.

In beiden oben genannten Fällen kann das Bildverarbeitungsmodul auf Grund der Relativbewegung entsprechende Weginformationen des zu erfassenden Werkstücks erhalten, um daraus ein maßhaltiges Bild zu erzeugen. Wenn die Geschwindigkeit der Bewegung konstant ist, kann insbesondere die Weginformation auch auf der Grundlage einer einfachen Berechnung (z.B. Position = Geschwindigkeit * Zeit) erfolgen.

Ist der Abstand zwischen Kamera und Werkstück unbekannt (z. B. ein Werkstückstapel mit unbekannter Höhe), kann bevorzugt eine Höhenmessfahrt vor der eigentlichen Werkstückerkennung erfolgen, bei dem zunächst nur der Abstand zwischen Kamera und Werkstückoberfläche detektiert wird. Die Höhenmessung kann hierbei mit dem größtmöglichen Abstand beginnen und kann schrittweise so lange verringert werden, bis die Kamera stabile Informationen liefert. Ist dieser Punkt erreicht, befindet sich die zu erkennende Oberfläche im Fokus der Kamera und die eigentliche Bildverarbeitung kann beginnen.

Bei der eigentlichen Bildverarbeitung werden die visuellen Informationen der letzten Bildaufnahmefahrt verwendet, um die Lage der Werkstücke hinsichtlich ihrer Verschiebung und Verdrehung zu ermitteln. Gleichzeitig erfolgt eine Vermessung der Teilegeometrie (z.B. Länge und/oder Breite) der Werkstücke und/oder das Auslesen des Codes auf einem auf die Werkstücke aufgebrachten Label. Der Vergleich der gemessenen Werkstückgröße und der im Code hinterlegten Daten kann bevorzugt dazu dienen, dabei gleichzeitig einer Validierung für die Erkennung der Werkstücke vorzunehmen.

Zusätzlich kann bevorzugt über den gelesenen Code auch eine Referenz zu den Informationen für die notwendige Werkstückbearbeitung verfügbar sein, womit eine nachfolgende Logik interaktiv entscheiden kann, zu welchem Zeitpunkt das erkannte Werkstück der weiteren Bearbeitung zugeführt werden kann und/oder welche eventuellen Umrüstungen zur korrekten Bearbeitung notwendig sind.

Die Logik kann bevorzugt mindestens teilweise eine künstliche Intelligenz umfassen. Die künstliche Intelligenz kann bevorzugt mindestens teilweise neuronale Netze mit mehr als eine Zwischenschicht zwischen Ein- und Ausgabeschicht, d.h. "deep learning", aufweisen.

Soll die Anlage mit maximaler Leistung gefahren werden, kann dies in einem manuellen Modus mittels Bedienpersonal erfolgen. In diesem Fall können dazu mehrere Bediener zum Einsatz kommen und es handelt sich um eine Produktion von Serienteilen.

Das Abarbeiten der Werkstückstapel im autonomen Betrieb kann kurzfristig für Reparaturteile und Teile, die ad hoc benötigt werden, unterbrochen werden. Die Anlage wechselt dazu in den manuellen Modus und kehrt nach Beendigung wieder in den autonomen Betrieb zurück.

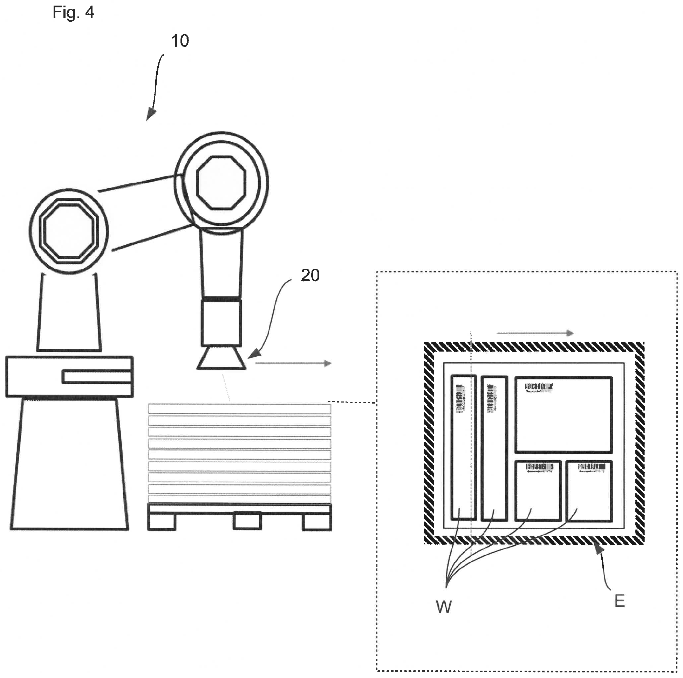

Fig. 4 ist eine schematische Ansicht der Handhabungseinrichtung 10 zur Erläuterung des Einsatzes der Handhabungseinrichtung 10, wobei die Übergabeeinrichtung weggelassen wurde. Eine an der oberen Seite des Werkstückstapels gelegene Ebene E ist in Fig. 4 in der Draufsicht gezeigt. In der Ebene E sind mehrere Werkstücke W angeordnet.

Gemäß diesem Ausführungsbeispiel umfasst das Kameramodul 20 eine Zeilenkamera, wobei gemäß einer weiteren Modifikation das Kameramodul 20 auch einen zweidimensionalen Sensor umfassen kann.

In diesem Fall scannt die Zeilenkamera durch einen Zeilensensor die erste Ebene E eines Werkstückstapels, wobei in der Ebene E mehrere Werkstücke W in einem bestimmten Abstand zueinander angeordnet sind. Ein Zeilensensor ist ein licht- oder strahlungsempfindlicher Detektor, bevorzugt ein Halbleiterdetektor, der einen eindimensionalen Array aus Fotodetektoren oder anderen Detektorelementen umfasst.

Die Zeilenkamera scannt die erste Ebene E des Werkstückstapels bevorzugt von einer Seite, die beispielsweise der Handhabungseinrichtung 10 am nächsten ist, bis zur am weitesten entfernten Seite der Ebene E. In Fig. 4 ist die Bewegung des Kameramoduls 20 durch einen Pfeil angedeutet.

Die von der Zeilenkamera gescannten Informationen bezüglich der ersten Ebene E des Werkstückstapels können dann an das Bildverarbeitungsmodul übertragen werden. Dieses kann die Werkstücke W beispielsweise anhand eines gescannten Barcodes und/oder Teilegeometrie identifizieren.

In einer Ausführungsform kann das Bildverarbeitungsmodul die Werkstücke beispielsweise durch Anwendung der Technik des computerbasierten Sehens (das sogenannte "Computer Vision") identifizieren. Das computerbasierte Sehen ist eine Technik der künstlichen Intelligenz, deren Aufgaben beispielsweise die Objekterkennung und die Vermessung der geometrischen Struktur von Objekten sein. Dabei werden in der vorliegenden Erfindung bevorzugt der Algorithmus der Segmentierung und/oder das Verfahren der Mustererkennung verwendet.

Auf Basis der Ergebnisse der Bearbeitung der gescannten Informationen, kann die Übergabeeinrichtung 30 die Werkstücke W der ersten Ebene E des Werkstückstapels in einer bestimmten Reihenfolge aufnehmen und übergeben. Auf Grund der erfassten Lage des jeweiligen Werkstücks kann das entsprechende Werkstück ohne weitere Ausrichtung aufgenommen und nach der Handhabung mittels der Handhabungseinrichtung 10 übergeben werden.

Die von dem Kameramodul 20 gescannten Informationen der jeweiligen Ebene des Werkstückstapels können gespeichert werden. Somit kann die Handhabungseinrichtung 10 zielgerichtet die einzelnen Werkstücke W jeweils nacheinander aufnehmen. Ferner können von der entsprechenden Ebene E gegebenen falls zu einem späteren Zeitpunkt auch Informationen über dem Fertigungsgrad und Produktionsgrad extrahiert werden und rückgemeldet werden. Auf diese Weise können die gescannten Informationen asynchron zum tatsächlichen Zeitpunkt ihrer Erfassung analysiert und/oder zurückgemeldet werden.

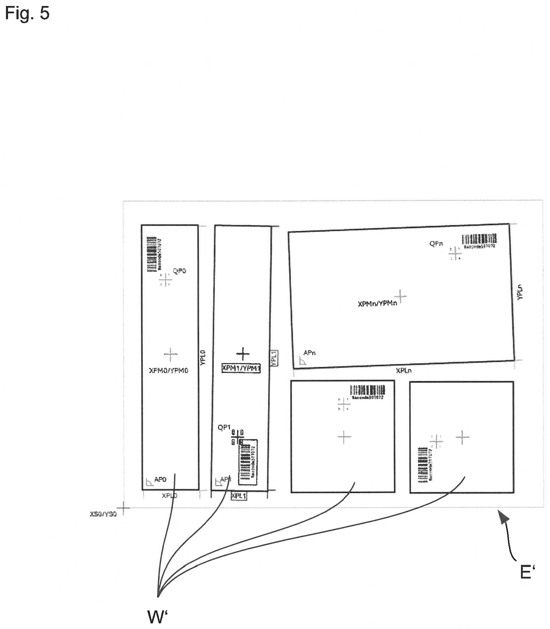

Fig. 5 zeigt eine weitere Ebene E' eines chaotischen Werkstückstapels. In diesem Fall sind keine regelmäßigen Abstände zwischen den Werkstücken vorhanden.

Das Kameramodul 20 scannt die Ebene des chaotischen Werkstückstapels. Danach kann das Bildverarbeitungsmodul die Verdrehung und Verschiebung der Werkstücke zueinander erkennen, z.B. auf Grundlage des Mittelpunkts der oberen Fläche jedes Werkstücks und/oder des Seitenverhältnisses der oberen Fläche jedes Werkstücks.

## Patentansprüche

1. Handhabungseinrichtung (10) zur Handhabung eines oder mehrerer Werkstücke (W, W'), die bevorzugt plattenförmig sind, umfassend:
eine Übergabeeinrichtung (30) zur Aufnahme und Übergabe des oder der Werkstücke (W, W') zwischen einem Ausgangsstapel, einer Transporteinrichtung und/oder einer Bearbeitungsmaschine,
ein Kameramodul (20), das mindestens eine Kamera aufweist,
wobei das Kameramodul (20) eingerichtet ist, das Werkstück oder die mehreren Werkstücke (W, W') zur räumlichen Identifikation zu erfassen.

2. Handhabungseinrichtung (10) gemäß Anspruch 1, ferner umfassend ein Bildverarbeitungsmodul, das eingerichtet ist, Daten vom Kameramodul (20) zu empfangen,
wobei das Bildverarbeitungsmodul eingerichtet ist, Daten einer Relativbewegung zwischen dem Werkstück (W, W') und dem Kameramodul (20) und von der Kamera aufgenommenen Bildinformationen zu verknüpfen.

3. Handhabungseinrichtung (10) gemäß einem der vorangegangenen Ansprüche, wobei die Übergabeeinrichtung (30) zumindest eine Halteeinrichtung (31, 32), insbesondere eine Saugtraverse, umfasst, wobei bevorzugt ist, dass die Halteeinrichtung (31, 32) zur Aufnahme einer oder mehrerer Werkstücke (W, W') eingerichtet ist.

4. Handhabungseinrichtung (10) gemäß einem der vorangegangenen Ansprüche, wobei das Kameramodul (20) eingerichtet ist, den aktuellen Produktionsgrad und den aktuellen Fertigungsgrad des oder der gehandhabten Werkstücke (W, W') rückzumelden.

5. Handhabungseinrichtung (10) gemäß einem der vorangegangenen Ansprüche,
wobei das Kameramodul (20) eingerichtet ist, zu erkennen, ob eine Umrüstung für die Aufnahme, und/oder Zuführung des oder der Werkstücke (W, W') notwendig ist,
wobei die Übergabeeinrichtung eingerichtet ist, auf Basis dieser Erkennung des Kameramoduls (20) die Umrüstung automatisch durchzuführen.

6. Handhabungseinrichtung (10) gemäß Anspruch 5,
wobei das Kameramodul (20) eingerichtet ist, zu erkennen, ob eine Umrüstung für die Aufnahme und/oder Zuführung des oder der Werkstücke (W, W') manuell durchführbar ist, und
wobei die Übergabeeinrichtung eingerichtet ist, auf Basis dieser Erkennung des Kameramoduls (20) das oder die Werkstücke (W, W') auf einem gesonderten Platz abzulegen.

7. Handhabungseinrichtung (10) gemäß einem der vorangegangenen Ansprüche, wobei das Kameramodul (20) eingerichtet ist,
das oder die Werkstücke (W, W') anhand seiner oder ihrer Teilegeometrie zu identifizieren, und/oder
nachfolgende Bearbeitungen auf das oder die Werkstücke (W, W') anhand einer von dem Kameramodul (20) gelesenen Code-Information zuzuordnen, und/oder
Stapelgeometrie und/oder Höheninformation eines Stapels von Werkstücken (W, W') zum Abtragen des Stapels zu erkennen.

8. Handhabungseinrichtung (10) gemäß einem der vorangegangenen Ansprüche, wobei Handhabungseinrichtung (10) ausgebildet ist, mindestens teilweise eine künstliche Intelligenz zu einer Prozessoptimierung zu verwenden,
wobei die Prozessoptimierung bevorzugt eine Optimierung der Bestimmung der Reihenfolge für die Aufnahme und Zuführung der Werkstücke (W, W') ist.

9. Handhabungseinrichtung (10) gemäß einem der vorangegangenen Ansprüche, wobei Handhabungseinrichtung (10) eingerichtet ist, mindestens teilweise eine Validierung zwischen den von dem Kameramodul (20) aufgenommenen Bilddaten und geometrischen Informationen aus einem bereits vorhandenen Datensatz durchzuführen.

10. Handhabungseinrichtung (10) gemäß einem der vorangegangenen Ansprüche, wobei das Kameramodul (20) an der Übergabeeinrichtung (30) angebracht ist.

11. System, umfassend eine Handhabungseinrichtung (10) gemäß einem der vorangegangenen Ansprüche und eine Bearbeitungsmaschine.

12. Verfahren zur Handhabung eines oder mehrerer Werkstücke, die bevorzugt plattenförmig sind, wobei bevorzugt die Handhabungseinrichtung (10) gemäß einem der vorangegangenen Ansprüche verwendet wird, umfassend:
Anfertigen von Bildern des oder der Werkstücke (W, W') durch ein Kameramodul (20),
räumliches Identifizieren des oder der Werkstücke (W, W'),
Aufnehmen und Übergeben des oder der Werkstücke (W, W') durch eine Übergabeeinrichtung (30) zwischen einem Ausgangsstapel, einer Transporteinrichtung und/oder einer Bearbeitungsmaschine.

13. Verfahren gemäß Anspruch 12, wobei für das Identifizieren des oder der Werkstücke, Daten einer Relativbewegung zwischen dem Werkstück (W, W') und dem Kameramodul (20) und von der Kamera aufgenommenen Bildinformationen verknüpft werden.
